**Europäisches Patentamt**

**European Patent Office**

**Office européen des brevets**

(11) Publication number: **0 012 777**
A1

(12) **EUROPEAN PATENT APPLICATION**

(21) Application number: **78101879.1**

(22) Date of filing: **30.12.78**

(51) Int. Cl.³: **G 06 F 15/38**

(43) Date of publication of application:
**09.07.80 Bulletin 80/14**

(84) Designated Contracting States:
**DE GB LU NL SE**

(71) Applicant: **SYSTRAN INSTITUT Ges.für Forschung und Entwicklung maschineller Sprachübersetzungssysteme mbH**
**Jakob-Klar-Strasse 9**
**D-8000 München 40(DE)**

(72) Inventor: **Toma, Peter, Dr.**

**La Jolla California(US)**

(54) **Method using a programmed digital computer system for translation between natural languages.**

(57) A Computerized translation method with universal application to all natural languages is provided. With this method, parameters are changed only when source or target languages are changed. The computerized method can be regarded as a self-contained system, having been developed to accept input texts in the source language, and look up individual (or sequences of) textwords in various dictionaries. On the basis of the dictionary information, sequences of operations are carried out which gradually generate the multiplicity of computer codes needed to express all the syntactic and semantic functions of the words in the sentence. On the basis of all the codes and target meanings in the dictionary, plus synthesis codes of such meanings, translation is carried out automatically. Procedures which generate and easily update main dictionaries, idiom dictionaries, high frequency dictionaries and compound dictionaries are integral parts of the system.

./...

## Fig. 2

METHOD USING A PROGRAMMED DIGITAL COMPUTER
SYSTEM FOR TRANSLATION BETWEEN
NATURAL LANGUAGES

This invention relates to a method utilizing a digital computer for translating between natural languages.

Attempts have been made to utilize digital computers for translating from one language to another, i.e., from a source language to a target language. The translation systems involve a programmable digital computer system along with a program for effecting the translation. The approaches used were theoretical. The theoretical language approach for syntactical analysis has not been acceptable because it starts out from linguistic assumptions instead of considering the capabilities of the programmable digital computer and approaching the translation from the computer's point of view.

The idea of machine translation was conceived in 1946 by Warren Weaver and A.D.Booth. Many attempts to achieve a machine translation system and put it into operation have been made. The projects were directed toward developing linguistic theories encompassing the whole natural language and then going to the computer. This approach inevitably failed because the human mind cannot encompass the totality of the laguage.

The following is a brief resume in the approaches and the theory behind them:

The "General Analysis Technique" -GAT - (Institute of Languages and Linguistics Machine Translation Research Center, Washington DC Juni 1959, by Peter Toma, Edited by J..A.Mayne) used a linguistics oriented computer coding scheme. Ad hoc solutions were introduced and the whole system was confined within a hollow restricted so-called Simulated Linguistic Computer (SLC)system written in octal language and not open for any further improvements.

The Fulcrum theory approach developed from 1959 to 1967 by the Bunker-Ramo Corporation, USA, was directed toward solving, with a relatively small dictionary, the problems occuring in a limited Russian text. No attempt was made to introduce resolution of multiple meanings; instead, several meanings were printed in the output, separated by slashes.

A predictive syntax system was developed by the National Bureau of Standards and Massachusetts Institute of Technology in 1960 to 1964. This approach failed because it considered only one limited path to the sentence. This system was never implemented on a larger scale, but was used just within a limited experimental environment.

Transformational grammar was another approach. However,this approach turned out to be absolutely incompatible with computer translation requirements. Only small experimental systems have been developed on the basis of this theory, and they had to be discontinued before any significant translation was produced.

As compared to the prior art it is an object of the invention to enable accurate, fast, almost instantaneous translation of large volumes of texts from one source language i.e. natural language into another natural language, the so-called target language.

Instead of a natural language an artificial language as par example Esperanto can act as source or target language as the case may be.

To achieve this purpose the subject matter of the present invention is a method using a programmable digital computer system, the steps comprising

a) converting a source text to be translated from visual indicia to computer intelligible binary coded signals;

b) storing in a main memory of the computer system the converted source text to be translated;

c) scanning and comparing such converted source text words with dictionaries of source language words stored in a memory and for each source text word for which a match is found, storing in a file in main memory each word and (sic in) association with each such word, coded information derived from such dictionary for use in translation of such word, the coded information including memory offset adress linkages to a memory in the computer system where grammar and target language translations for the word are stored;

d) analyzing the converted source text words in the file of words, a complete sentence at a time, and converting the same into a sentence in the target language utilizing the coded information and including the steps of

(1) utilizing the memory offset adress linkages for obtaining the target language translations
of words from a memory; and

(2) reordering the target language
translation into the proper target
language sequence;

e) converting the target language sequence from
computer intelligible binary coded signals
back to visual indicia.

f) printing the target language.

Advantageously the method comprises a step wherein
a special subroutine of the dictionary lookup
process searches a list of words (lexical list) to
determine which words require the incorporation of
a special lexical subroutine into the dictionary
file and a separate lexical control program analyzes
the words of the source language sentence for those
cases where only the results of the syntactic/
semantic analysis of the sentence or the membership
of a word in a grammatical or semantic class can
determine wehther or not a lexical subroutine must
be called in at the time of translation of a specific
word or expression in order to determine the meaning
of that word or expression by examining the syntactic
relationships which have been established for said
word or expression and utilizing syntactic and/or
semantic rules which apply only to that word or the
class of words to which it belongs.

There is advantageously provided a method of resolving
semantic ambiguities, wherein each word in the stem
(single-word) dictionary is assigned a unique limited
semantic (LS) number, and the specialized multi-word
expressions of the LS compound dictionary (LS-expressions)
which are composed of the LS number representation
of their individual words in the stem dictionary, are
then automatically grouped into a dictionary record
according to the principal word of the expression,
one existing for each unique principal word, and
the record is then searched whenever the principal
word occurs in the sentence to be translated, in
order to determine if a match exists between a group
of contiguous words in the text and any of the expressions
in that record, the longest match or the highest-priority
expression being used to determine the specialized
meaning of that group of words, which differs from the
sum of the meaning of the individual words; a subset
of an LS expression is the conditional limited semantic (CLS)
expression, which permits the inclusion of all definable
syntactic and semantic rules, as well as simple programming
instructions which can be used to change the information
stored in the bits and bytes of the sentence analysis
area, in the LS expression itself (i.E. in the dictionary),
so that the dictionary expression is only matched when
the syntactic and/or semantic conditions expressed in
the rule(s) have been met by the word(s) in the text;
this fact being determinable only after a complete
syntactic and semantic analysis of the sentence has been
carried out by the linguistic analysis programs.

In the method advantageously all source language words
can be supplied with semantic category codes in a
variable length format, which are then interrogated by

0012777

by the source language analysis programs, the lexical
routines, and the CLS dictionary lookup routines as
an aid in resolving semantic ambiguities; these codes
are expressed in a hierarchical taxonomy (set of
tree structures) in such a way that the coding of a
category which exists at a lower level of a semantic
tree generates the automatic coding of the appropriate
higher-level codes by the system itself.

The invention involves a method of operating a digital
computer to translate from a source natural language,
e.g. Russian, to a target natural language, e.g.
English. The method involves three phases. The
dictionary look-up phase establishes the target language
meaning of each word or expression in the source text.
This dictionary look-up phase attaches grammatical
codes and target language equivalents to each word
and expression in the source language. The syntactical
analysis phase identifies syntactical information
on the basis of the grammatical information attached
to the words and expressions and also utilizes the
inflection of the word and the position of the word in
the source text. The synthesis phase takes the meaning
and syntactical information of all the words of a
sentence in the source text and forms a sentence
in the target language.

More specifically, the method begins by loading the
source text into the memory of a computer. Each source
text word is then transformed into a converted source
text word. The converted source text word consists
of the source text word and coded information.
The coded information may include a memory offset
adress linkage which provides access to a memory

0012777

location that contains syntactical information and translation for the source text word. The converted source text words which derive from a source text sentence are then synthesized into a target language translation of that sentence. The synthesis correctly establishes both word meaning and word position in the target language sentence.

An important aspect of the invention is the separate treatment given high frequency versus low frequency words. In order to maximize the effective capacity of the core memory of the computer, the low frequency words carry their translation information along with them, while each of the high frequence words carries a memory offset address linkage which allows easy access to its translation information which is stored in the core memory. Thus, the translation information for frequently used words is held in an easily accessible place in the computer rather than along with every occurrence of the word as is done for low frequency words.

While the above description portrays a human analogy of how the claimed invention functions, it must be understood that, in fact, the actual operation of the process by the computer is quite different. From the time that the source text is converted to machine -readable input data until the time that the machine-readable output data is converted to human-readable translation text, the claimed process proceeds under the control of a computer program. While it is convenient to describe the steps of the program as if they were being performed by a human translator, in fact, nothing of the kind is happening. Rather, the computer is carrying out a series of unthinking, abstract mathematical operations on the abstract values stored
in the memory of the computer. The program functions
independently of the meaning or significance of the
data on which it is acting. The fact that the program
is formed in a high level programming language, which
makes the program appear to give significance to the
machine operation, does not change the fact that the
machine is actually carrying out a series of abstract
steps which have nothing to do with translating between
natural languages. If a different kind of information
were fed into the computer, the program used in this
invention could conceivably perform a function totally
different from translating.

The invention comprises also the process by which information is extracted from the computer including
printing out the translation i.e. the step converting
the target language sequence from computer intelligible
binary coded signals back to visual indicia.

It is of great advantage that by means of the present
invention any source language can be translated into a
target language by applying the proposed method and by
making use of same equipment, just by changing language
dependend parts of the equipment, as dictionaries and
linguistic programs which includes the whole syntactic
and semantic rules of both languages.

Another advantage of the method according to the invention
is the consistancy of the translation, i.e. a particular
expression is translated from the source language into
the target language with the same environment, if the
environment changes the invention correspondingly changes
the meaning of the expression with the above mentioned
consistancy. Also the recognition of all the syntactic

and semantic features of the source language are reflected in the target language is of advantage.

Specific embodiments of the invention will now be described by way of example with reference to the accompanying drawings, in which:

Figure 1      illustrates the translation processing,

Figure 2      shows the dictionary lookup schematic and

Figure 3      shows a summary of programs schematic.

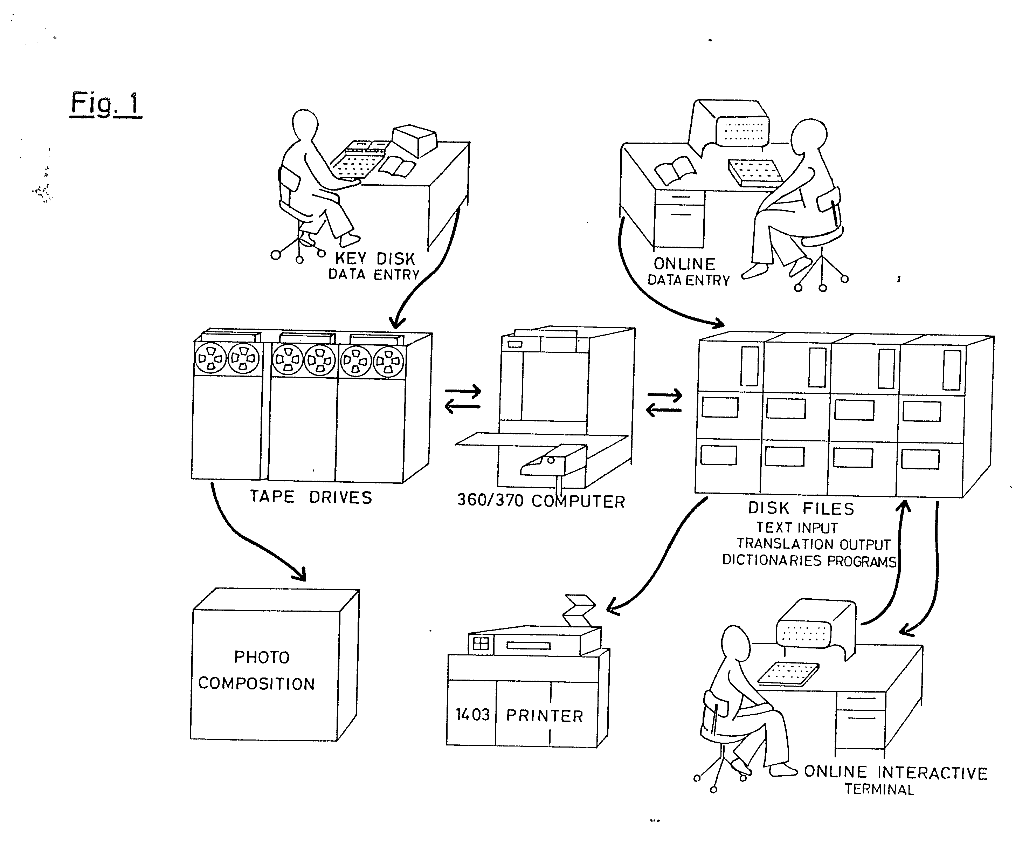

As shown in Figure 1 texts are input to the translation system either on-line via a terminal or off-line via key-to-disk or key-to-tape devices. (Input via punch cards is also possible). The input text and the translation dictionaries and programs reside on disk files accessible by the computer, which performs the translation. The results are then printed out in the desired format on the printer taking into consideration any format codes in the input text.

Post-editing of the output text and any resulting dictionary update can take place, if desired, via on-line interactive terminal (or it can be performed off-line by post-editors and dictionary codes).

Diagrams and tables which must be included in the same form in the translated output can be incorporated in the text via a photocomposition device.

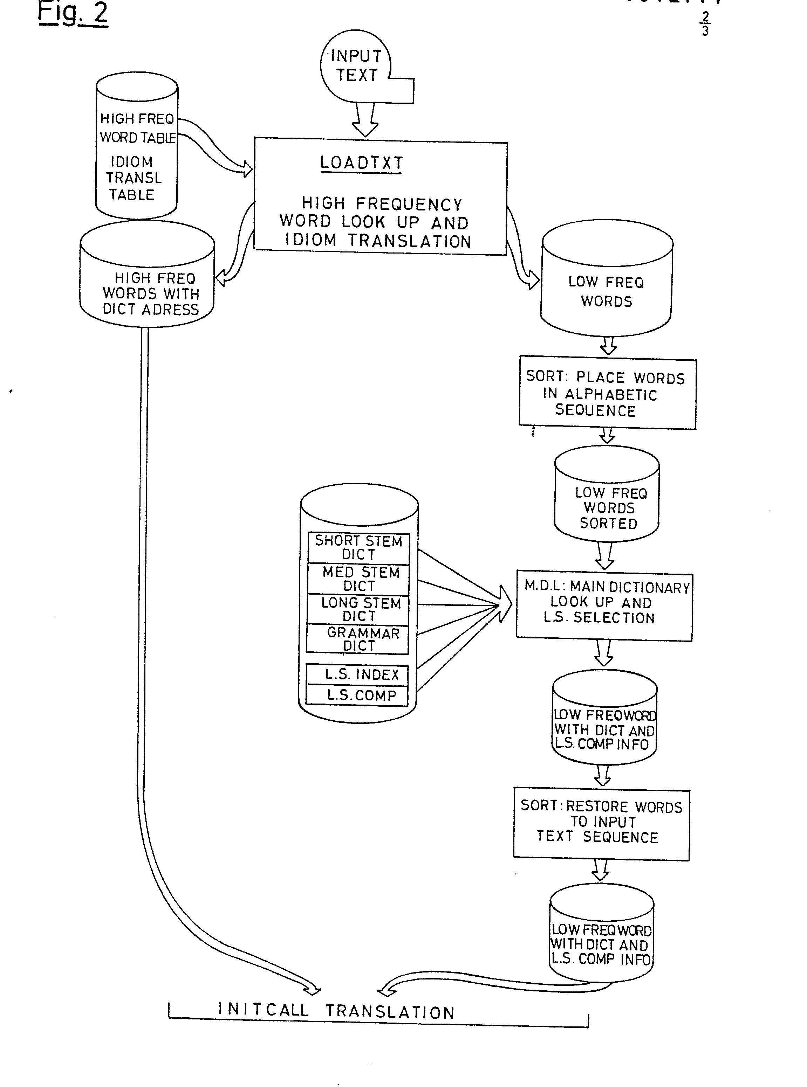

Figure 2 illustrates the program which loads the input text into computer memory (LØADTXT) identifies the high-frequency words and the idioms in the text and assigns each word of the text a unique serial number. It immediately attaches a translation to the idioms and ensures that the information for all the high-frequency words is immediately available in computer core memory during the translation process. The remaining (low-frequency)words are then sorted into alphabetic order to facilitate the process of main dictionary look-up (MDL). Main dictionary look-up attaches to each low-frequency word the necessary grammatical information as well as a cross-reference to the record of multi-word limited semantic (LS) compounds containing that word. After main dictionary look-up all the words in the text are re-sorted into their original sequence.

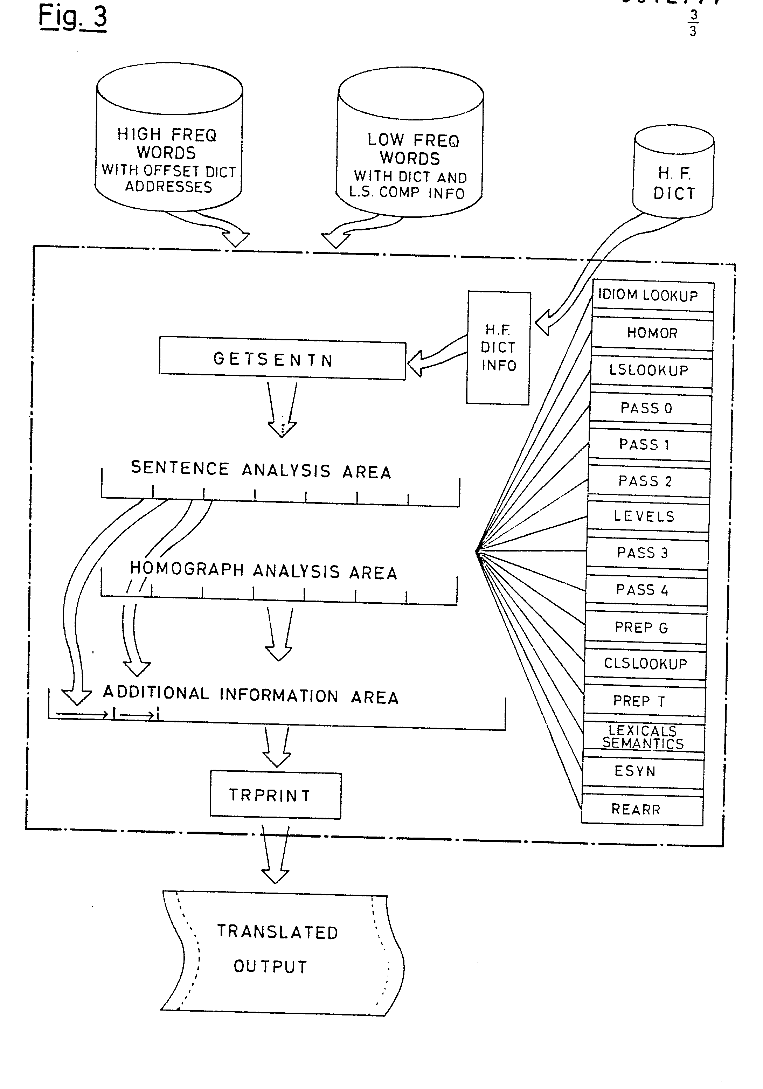

According to Figure 3, the program INITCALL controls the actual translation process. It first calls the program GETSENTN, which establishes a sentence analysis area in computer memory, consisting of 160 bytes of fixed-length information for each word, with cross-references to additional variable-length information areas.

At first the sentence analysis area contains only the dictionary information for each word. During the translation process, additional information is added by the source language analysis programs (refered to as "passes") which resolve syntactic and semantic ambiguities, establish clause boundaries, describe basic syntactical relationship between words, identify subject/predicate relationships and analyze the function of any prepositions.

Limited semantic (LS) and conditioned limited semantic
(CLS) dictionary look-up takes place at appropriate
points in the analysis, conditioned limited semantic
look-up being possible only after the entire sentence
has been analyzed.

The remaining four steps, which synthezize the target
language on the basis of the total information contained
in the sentence analysis area, are: the translation of
prepositions, the solving of word-specific problems by
lexical routines, the actual synthesis of the target
language words, and the rearrangement of the sentence
into  the word order appropriate to the target language.

The final step in the translation process is printing
of the translated output by programm TRPRINT.

C L A I M S

1.)     A method for translation between source and target
        natural languages using a programmable digital
        computer system
        c h a r a c t e r i s e d   b y
        the following steps:

a) converting a source text to be translated from visual
   indicia to computer intelligible binary coded signals;

b) storing in a main memory of the computer system the
   converted source text to be translated;

c) scanning and comparing such converted source text
   words with dictionaries of source language words stored
   in a memory and for each source text word for which a
   match is found, storing in a file in main memory each
   word and (sic in) association with each such word,
   coded information derived from such dictionary for use
   in translation of such word, the coded information
   including memory offset adress linkages to a memory
   in the computer system where grammar and target
   language translations for the word are stored;

d) analyzing the converted source text words in the
   file of words, a complete sentence at a time, and
   converting the same into a sentence in the target
   language utilizing the coded information and including
   the steps of :

(1) utilizing the memory offset
adress linkages for obtaining
the target language translations
of words from a memory; and

(2) reordering the target language
translation into the proper target
language sequence;

f) printing the target language.


2.) A method according to claim 1 including the step
of:
storing a dictionary of high frequency source words
and associated offset address linkages, the offset
address linkages identifying the storage location
of grammar and meaning information for the source
words;
storing a dictionary of low frequency source words
in association with grammar code meanings for each
word; a stem word for the source language together
with offset linkages identifying the location of
target language grammar codes and meanings.
comparing the source language text words with the
high frequency dictionary words and upon detecting
an equality with a word, storing the word and associated offset address linkages together in a high
frequency file; and
comparing the source language text words with the low
frequency dictionary words and upon detecting an
equality, storing the word and the associated grammar
code meanings in a low frequency file.

- 3 -

3.) A method according to claim 2 wherein:
second and succeeding idiom words, if any, in a source idiom are stored in at least one dictionary in memory;
the high frequency dictionary includes the first words of source language idioms and associated therewith address linkages to second and subsequent words in the same idiom which are located in the idiom dictionary, the first word and subsequent words, if any, of an idiom having an associated target language meaning stored in association therewith; and
during comparison with the high frequency dictionary comprising the steps of:

a) detecting those words that are equal and are first words of idioms;

b) utilizing the offset address linkages to locate the additional word or words in the same idiom located in the idiom dictionary;

c) comparing the located further words in the idiom with the words in the source text which follow the first idiom word for an equality; and

d) upon detecting such an equality, storing the first idiom word together with the target language meaning into the high frequency file;

e) storing each one of the second and subsequent idiom words together with an idiom tag into the high frequency file, the idiom tag designating that the word is not the first word of the idiom;

f) storing the first word of an idiom together with a tag into the high frequency file, the tag designating that the word is the first word of an idiom.

g) during analyzing selecting the target meaning associated with a first idiom word as the translation of the first and subsequent idiom words.

4.) A method according to claim 1 including the step
of storing an indication in association with the
words in the low frequency file, of whether the words
are principal and/or participating words in limited
semantic compounds;
such compounds stored in separate files is stored
containing limited semantic numbers for each principal
word, the limited semantic numbers indicating all
participating words, the limited semantic numbers of
participating words being attached to the principal
words in the same sequence in which the participating
words form compound expressions with the principal
word;
wherein during scanning and comparing with dictionaries,
information is attached to the principal word concerning
all the compound expressions within which the principal
word may function as key word in a compound, the attached
information containing either sequences of limited
semantic numbers or an address of an auxiliary storage
device where such information is located, and including
the additional steps of bringing into a main working
memory from the auxiliary storage device during analyzing
the file of words, the limited semantic numbers
assigning a subject field code to the source text,
if the same compound expression of the source language
indicated by the limited semantic numbers have different
target meanings, then selection of the correct meaning
for the compound depending upon the subject field code
in which the translation takes place.

5.) A method, according to claim 1, wherein the step of
analyzing includes the step of analyzing the source
text and the step of placing the source language sentence
in a special area, reserved for this purpose in the
computer memory, analysis moving from beginning to end
and from the end to beginning of the source language

0012777

sentence, setting up tags of specific relationships
of the sentence environment, and wherein the tags are
set by routines in the computer program which are
originated in response to different parts of speech
among the words; during analysis information is stored,
for use in remembering from one source text sentence
to another enabling the translation of those words for
which antecedant from the previous sentence is
necessary; also during analysis semantic and syntactic
analysis passes are made trough each source sentence
attaching coded information, the passes being made
from beginning to end or end to beginning, depending
upon the codes being attached to the individual words,
and the characteristics of the source language; and
during the step of scanning, comparing and storing
parts of speech coddes are assigned to source text
words and wherein during analysis the assigned parts
of speech codes are used to branch into a required routine
by adding the value of part of speech to a fixed address
to carry out an analysis; wherein during the step of
analysis of the source language words the computer
keeps track of previously encountered situations by
setting a series of memory switches; each time a new
part of speech in encountered a series of previously
set switches are selectively turned off while additional
switch or switches are selectively turned on, routine
for interrogating the switches in a predetermined order,
also during analysis each word of the sentence is
assigned definite coded information as to whether it
belongs to a main clause or subordinate clause,
routine being assigned for searching source words
within each clauses for predicate (s) and subject (s)
subsequently during analysis predicate(s) and Subject(s)
of the source language are searched for by routines and

are correspondingly marked with codes, the predicate(s) and subject(s) being searched for by the routines within clauses embedded clauses thereby being taken into consideration, the routines determining if there is a question as to whether the function of a comma or conjunction is to begin a new clause, and performing separate searches for predicate(s) and subject(s) decide the answer as a result of the analysis each source word in a sentence is supplied with pointers which express the interdependency relationship among all words in the sentence; ath the same time syntactic function is assigned to each word in a sentence, such syntactic function being expressed in a condensed form using coded bis, the syntactic analysis continuing until each word in the sentence is assigned at least one function.

6.) A method according to claim 1 wherein a dictionary of topical glossary information is stored which contains different target language meanings for a source word in accordance with different technical subjects, including in step a program routine for examining each source sentence under analysis and for selecting meanings from the topical glossary dictionary corresponding to the technical subject matter of the sentence.

7.) A method according to claim 1 by which the source language sentences are analysed in a hirgrchical order, a first pass resolving basic ambiguity, a second following pass establishing primary syntactic inter connection, and a third following pass expanding these interconnections and delimiting phrases and clauses, a fourth following predicate - subject pass searching in hirarchical order for predicate (s) and subject (s) resolving remaining sentence separator ambiguities,and fifth following pass assuring that the function of every word in the sentence has been correctly recognized.

8.) A method,according to claim 1,wherein the major syntactic passes call upon generalized subrutines to determine and code syntactic relationships and, in turn,the subroutines selectively call minor or nested subroutines to carry out basic tasks.

9.) A method,according to claim 1,wherein a separate program determines and analyses the prepositions of the source language and determines their meaning inherent to the prepositions,the meaning of a pre- position either determined by words which govern the preposition or by words which function as the preposition,coded information for the translation of one or more prepositions is attached to the words from the dictionaries.

10.) A method,according to claim 1,including the steps of analysing each word in multiple passes through each sentence assigning codes thereto,considering all the codes which previous passes attach to a word and assigning target language synthesis codes attached to the meaning with which the code function is in the sentence,placing the word into a form corresponding to the target language dependent upon the analysis and consideration of all relevant codes assigned to the words,the translated words formed after analysing in a print area in a sequence specified by the relationships between the source and target languages and set up previously by the numbersgiven aftereach word and transferring the

0012777

translation when the print order is filled
either directly onto a printer or onto a temporary
auxiliary storage device.

A method, according to claim 1, including a step wherein
a special subroutine of the dictionary lookup pro-
cess searches a list of words (lexical list) to determine which words require the incorporation of a
special lexical subroutine into the dictionary file
and a separate lexical control programm analyses
the words of the sourcelanguage sentence for those
cases where only the results of the syntactic / semantic analysis of the sentence or the membership of
a word in a grammatical or semantic class can determine whether or not a lexical subroutine must be
called in at the time of translation of a specific
word or expression in order to determine the meaning
of that word or expression by examining the syntactic
relationships which have been established for said
word or expression and utilyzing syntactic and / or
semantic rules which apply only to that word or the
class of words to which it belongs.

A method, according to claim 1, includingxthe of resolving
semantic ambiguities, wherein each word in the stem
(single word) dictionary is assigned a unique limited
semantic (LS) number, and the specialized multi-word
expressions of the LS compound dictionary ((LS-
expressions) which are composed of the LS number
representation of their individual words in the
stem dictionary, are then automatically grouped into
a dictionary record according to the principal word
of the expression, one existing for each unique principal word, and the record is then searched whenever
the principal word occurs in the sentence to be translated, in order to determine if a match exists between
a group of contiguous words in the text and any of
the expressions in that record, the longest match or
the highest-priority expression beeing used to de-

- 9 -

termine the specialized meaning of that group of
words,which differs from the sum of the meaning
of the individual words;asubset of an LS expression
is the conditional limited semantic(CLS)expression,
which permits the inclusion of all definable syntactic
and semantic rules,as well as simple programming
instructions which can be used to change the information stored in the bits and bytes of the sentence
analysis area,in the LS expression itself (i.e.in
the dictionary),so that the dictionary expression
is only matched when the syntactic and / or semantic
conditions expressed in the rule (s) have been met
by the word(s) in the text,this fact beeing determinable only after a complete syntactic and semantic
analysis of the sentence has been carried out by
the linguistic analysis programs.

13.) A method,according to claim 1,wherein all source
language words can be supplied with semantic category codes in a variable length format, which are
then interrogated by the source language anylysis
programs, the lexical routines, and the CLS dictionary lookup routines as an aid in resdving semantic
ambiguities; these codes are expressed in a hierarchical taxonomy (set of tree structures) in such a
way that the coding of a category which exists at
a lower level of a semantic tree generates the
automatic coding of the appropriate higher-level codes
by the system itself.

14.) A method, according to claim 1, including the steps
of analyzing a sequence of words in the source language within phrases and clauses in relation to the
target language word sequence, the target language
word sequence being expressed symbolically by assigned numbers and printing out the translation
taking into consideration each source word. BAD ORIGINAL

# Fig. 1

KEY DISK DATA ENTRY

ONLINE DATA ENTRY

TAPE DRIVES

360/370 COMPUTER

DISK FILES
TEXT INPUT
TRANSLATION OUTPUT
DICTIONARIES PROGRAMS

PHOTO COMPOSITION

1403 PRINTER

ONLINE INTERACTIVE TERMINAL

0012777

$\frac{2}{3}$

# Fig. 2

## Fig. 3

HIGH FREQ WORDS
WITH OFFSET DICT ADDRESSES

LOW FREQ WORDS
WITH DICT AND L.S. COMP INFO

H. F. DICT

H.F. DICT INFO

GETSENTN

SENTENCE ANALYSIS AREA

HOMOGRAPH ANALYSIS AREA

ADDITIONAL INFORMATION AREA

TRPRINT

IDIOM LOOKUP

HOMOR

LSLOOKUP

PASS 0

PASS 1

PASS 2

LEVELS

PASS 3

PASS 4

PREP G

CLSLOOKUP

PREP T

LEXICALS SEMANTICS

ESYN

REARR

TRANSLATED

OUTPUT

European Patent Office

**EUROPEAN SEARCH REPORT**

0012777

Application number:

EP 78 10 1879

| | DOCUMENTS CONSIDERED TO BE RELEVANT | | CLASSIFICATION OF THE APPLICATION (Int. Cl.²) |
|---|---|---|---|
| Category | Citation of document with indication, where appropriate. of relevant passages | Relevant to claim | |
| X | ENGINEERING, vol. 209, no. 5426 1 May 1970 London, UK SZANSER A.J.: "Machine Translation" pages 453-456.   * Page 453, line 47 - page 454, line 74 *   -- | 1,3 | G 06 F 15/38 |
| X | US - A - 3 312 946 (CRAFT J.L. et al.)   * Column 2, lines 36-57; column 4, lines 18-51; column 7, line 34 - column 14, line 43, column 59, line 74 - column 60, line 9 and figures 1A,1B *   -- | 1,3,4, 5 | TECHNICAL FIELDS SEARCHED (Int Cl.²)  G 06 F 15/38 G 06 F 15/20 G 11 C 15/00 G 06 K 9/72 |
| | US - A - 3 675 211 (RAVIV)   * Column 2, lines 4-26; column 9, line 47 - column 10, line 47 and figures 1-5 *   ---- | 2 | |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family,

corresponding document

The present search report has been drawn up for all claims

| Place of search | Date of completion of the search | Examiner |
|---|---|---|
| The Hague | 09-08-1979 | HARRIS |

EPO Form 1503.1  06.78